Europäisches Patentamt

(19) European Patent Office

Office européen des brevets

(11) Publication number : **0 470 052 A2**

# (12) EUROPEAN PATENT APPLICATION

(21) Application number : **91830196.1**

(22) Date of filing : **13.05.91**

(30) Priority : **02.08.90 IT 702890**

(43) Date of publication of application :
**05.02.92 Bulletin 92/06**

(84) Designated Contracting States :
**AT BE CH DE DK ES FR GB GR IT LI LU NL SE**

(71) Applicant : **GALATRON S.r.l.**
**22 Via Dell'Artigianato**
**I-46043 Castiglione d/Stiviere (Mantova) (IT)**

(51) Int. Cl.⁵ : **F16K 27/00**

(72) Inventor : **Orlandi, Alessio**
**22 Via Dell'Artigianato**
**I-46043 Castiglione D/Stiviere (Mantova) (IT)**

(74) Representative : **Manzoni, Alessandro**
**MANZONI & MANZONI - UFFICIO**
**INTERNAZIONALE BREVETTI P.le Arnaldo n. 2**
**I-25121 Brescia (IT)**

(54) **Sealing assembly between a tap body and a mixer valve.**

㊐  The invention relates to a sealing assembly between a cartridge type mixer valve and a tap body in which it is inserted and fixed by a ring nut. Seals (13-19) are placed at the top of the mixer valve (11) and/or tap body (10) for either a direct sealing of the two components or with the use of the ring nut (12).

Fig.1

EP 0 470 052 A2

The present invention relates to the fitting of a cartridge type mixer valve to a tap, and more in particular to a sealing assembly between the tap body and the mixer valve.

Generally, the seal between a hot and cold water mixer valve and the tap body in which it is inserted is, in present realizations, at the bottom of the cartridge with at least one seal, usually toric, fitted on the outside of the cartridge. On one hand this means that the inlet of the tap and its slot is formed inside the tap body, towards the bottom of the cartridge and, however, below the seal so that said seal can be used effectively. On the other hand, these cartridge type mixer valves are unsuitable when, as in some realizations, the tap inlet is above the peripheral seal of the cartridge.

The object of the present invention is to eliminate these limitations and disadvantages through a new disposition of seals between a cartridge type mixer valve and tap body in such a way so as to keep the placing of the seal completely clear from the height, width or configuration of the tap inlet and allow for a universal fitting of the mixer valves to all types of taps.

Thus, in accordance with the invention, the seals between the tap body and cartridge type mixer valve are together placed in the upper part of the cartridge, therefore always above the inlet of the tap, however high it may be.

The seals can be placed directly between the cartridge and the tap body and/or between the cartridge and ring nut of the valve inside the tap body and/or between the ring nut and the tap body.

Examples of practical realizations of the invention are illustrated in the attached drawings which will be described in more detail. In said drawings:

Fig. 1 is a section view showing a tap body with a mixer valve inserted and having a seal between them;

Fig. 2 is similar to Fig. 1 but whith a seal between the cartridge and ring nut andd also betwen the ring nut and tap body;

Fig. 3 is another realization which also has a seal between the cartridge and the ring nut and between the ring nut and the tap body; and

Figs. 4 and 5 are similar realizations to the one in Fig. 3 but with a different placing and shape of the seals.

The tap body (10) and the cartridge type mixer valve (11) are already known and will therefore not be described in detail.

The tap body (10) has a water delivery conduit (10a) with an inlet (10b) positioned at any height, being of any dimension and is open towards a slot (10c) into which the mixer valve is inserted. The mixer valve is fixed with the auxiliary of a threaded ring nut (12) which is screwed to the top of the body (10) and resting on the cartridge (11).

Seals are placed between the tap body (10) and the cartridge (11), and they are placed in the top part of said components.

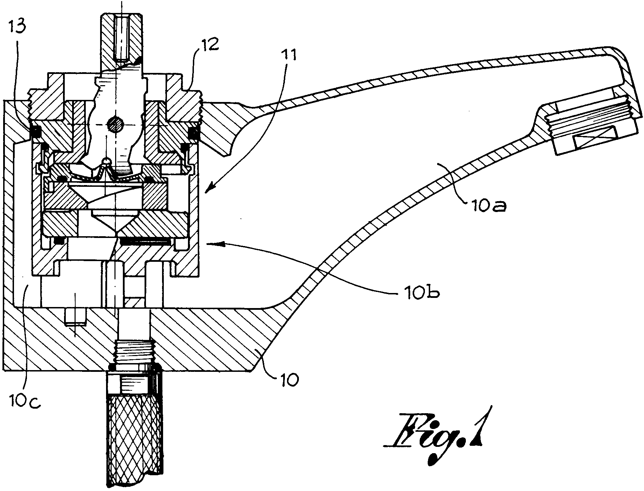

In accordance with the invention, for the solution in Fig. 1, at least one toric seal (13) which rests against and seals the surface of the tap body (10) above the inlet (10b) of the tap (10a) is fitted around the top part of the cartridge (11).

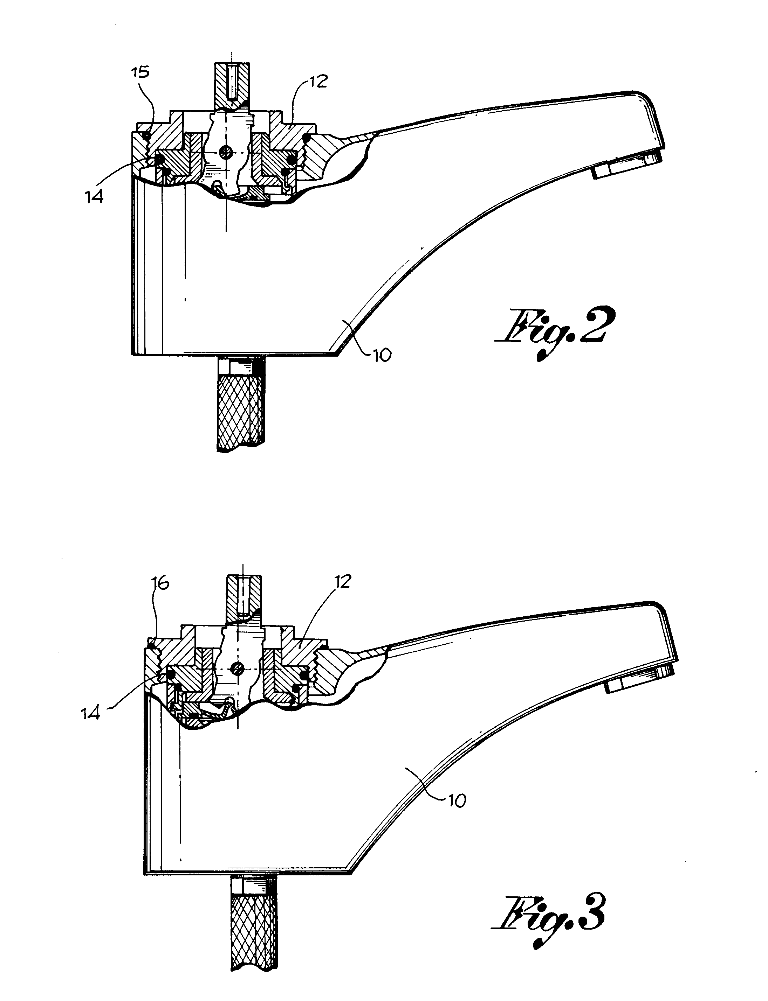

For the solution in Fig. 2, at least one toric seal (14) which rests against a facing surface of the ring nut (12) is peripherically fitted in the top part of the cartridge (11) and another toric seal (15) is fitted between the ring nut and the top of the tap body (10) so as to attain a double seal between the two assembled elements (10, 11, 12).

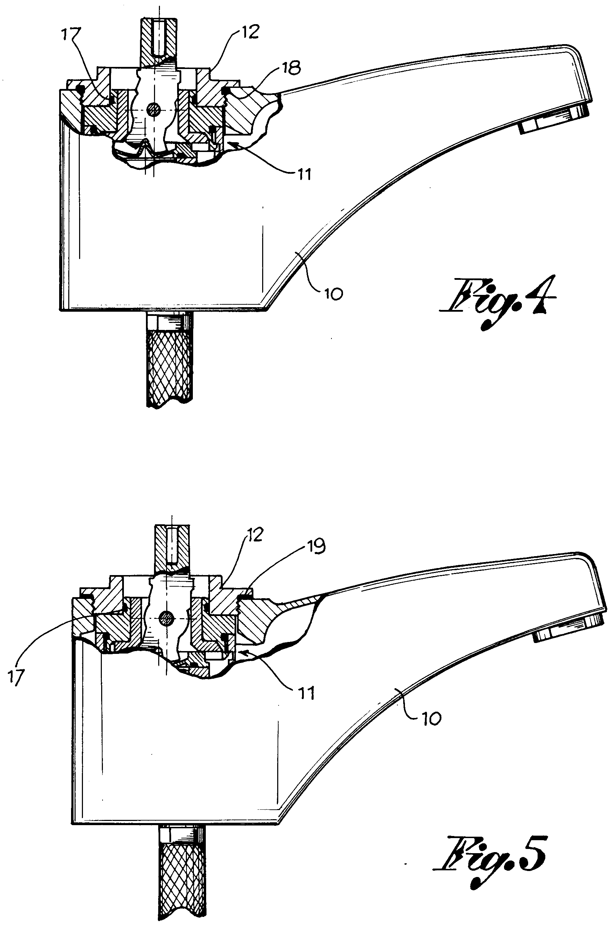

The solution in Fig. 3 is similar to the one in Fig. 2 apart from the use of a flat annular seal (16) fitted between the ring nut (12) and the top of the tap body (10).

A realization in which a seal (17) is placed between the top of the cartridge (11) and the ring nut (12) and a toric seal (18) is placed between said ring nut (12) and the top of the tap body (10) is shown in Fig. 4. The solution in Fig. 5 is similar apart from that it makes use of a flat annular seal (19) placed between the ring nut (12) and the top of the tap body (10).

Obviously other shapes and placements of the seals are possible without altering the invention as long as they are used for sealing the two parts at the top of the components.

## Claims

1) Sealing assembly between a cartridge type mixer valve and a tap body in which it is inserted where the mixer valve is fixed inside said body by a ring nut, characterized in that there are seals (13-19) placed at the top of the mixer valve (11) and/or tap body (10) for either a direct sealing of the two components or through the ring nut (12).

2) Sealing assembly as claimed in claim 1, characterized in that at least one seal (13) is placed around the top of the mixer valve (11) and rests against a facing surface of the tap body (10).

3) Sealing assembly as claimed in claim 1, characterized in that at least one seal (14) is fitted around the top of the mixer valve (11) and rests against a facing surface of the ring nut (12) and a seal (15, 16) fitted between the ring nut (12) and the tap body (10).

4) Sealing assembly as claimed in claim 1, characterized in that at least one seal (17) is fitted between the top of the mixer valve (11) and the ring nut (12) and a seal (18, 19) fitted between the ring nut (12) and the tap body (10).

5) Sealing assembly as claimed in claim 3 or 4, characterized in that the seal fitted between the ring nut and tap body is toric or flat.

Fig.1

Fig.2

Fig.3

Fig.4

Fig.5